# EUROPÄISCHE PATENTSCHRIFT

(11) **EP 0 532 472 B1**
(45) Veröffentlichungstag und Bekanntmachung des Hinweises auf die Patenterteilung: **26.07.1995**
(21) Anmeldenummer: 92810696.2
(22) Anmeldetag: 10.09.1992
(51) Int. Cl.: B62B 5/04, B66B 31/00

(54) **Blockiervorrichtung an Rollen für von Hand bewegte Transportwagen mit einem die Fahrbahn nur bei Bedarf berührenden Tastfühler**
Brake device for trolley wheels using a probe which, as required, interacts with the ground
Moyen de blocage pour chariots, utilisant une pièce qui, quand nécessaire, réagit avec le sol

(30) Priorität: 13.09.1991 CH 2701/91; 25.02.1992 CH 563/92
(43) Veröffentlichungstag der Anmeldung: 17.03.1993
(73) Patentinhaber: MUBIR AG FüR MASCHINEN- UND APPARATEBAU, CH-5040 Schöftland (CH)
(72) Erfinder: Müller, Werner, CH-5000 Aarau (CH)

(56) Entgegenhaltungen:
- GB-A- 2 057 997
- US-A- 3 298 495

## Beschreibung

Die Erfindung betrifft eine Blockiervorrichtung für Rollen an von Hand bewegten Transportwagen, namentlich Selbstbedienungswagen,welche auf längsgerillten Transportbändern Höhendifferenzen zu überwinden haben. Die zum Stande der Technik gehörenden Rollen sind entweder mit zwei schmalen Laufkränzen versehen, die in die Rillen der Transportbandes eintauchen und dann einen Bremskörper mit dessen Rippen in Reibkontakt treten lassen, wobei die Rolle selbst überhaupt nicht blockiert wird, oder es sind Rollen mit über die ganze Breite durchgehender Lauffläche, deren Blockiervorrichtung einen zum Eintauchen in die Rillen bestimmten Tastfühler aufweiset, welcher ständig oder doch intermittierend während jeder Rollenumdrehung Fahrbahnkontakt hat.
Erstere sind geräuschvoll und beanspruchen die Fahrbahn stark, da wegen des grossen Flächendruckes die Laufkränze aus hartem Material hergestellt sind. Ausserdem sind sie schwer lenkbar, falls die Laufkränze nicht unabhängig voneinander drehbar sind, was wiederum die Herstellung verteuert. Bei den zweitgenannten ist der Tastfühler der schwache Punkt, da er ständig auf der Fahrbahn schleifen, rollen oder gar noch weiter Bewegungen ausführen muss, obwohl er aus Preis- und Platzgründen nicht ausreichend robust gebaut und gelagert werden kann, oder dann die Laufeigenschaften der Rolle nachteilig beeinflusst.

Rollen, bei denen die Blockierung durch die Neigung des Transportbandes bewirkt wird, indem etwa eine Kugel sperrend Teile des Rollenkörpers mit Teilen des Gehäuses verbindet, sind auf Transportbändern mit horizontalem Abschnitt unbrauchbar.

Es hat nicht an Versuchen gefehlt, den Winkel, den die Fahrbahnflächen der Ein- und Austrittskämme mit der Ebene des Transportbandes bilden, zur Betätigung der Blockiervorrichtung zu benutzen. Dieses Merkmal unterscheidet sich indessen zu wenig von zufälligen Unebenheiten, die unterwegs, fern vom Transportband, auftreten können.

Es ist an sich auch bekannt, Magnete einzusetzen, um Selbstbedienungswagen auf geneigten Transportbändern am Wegrollen zu hindern. In der Patentschrift US-A-3298495 wird eine Vorrichtung gezeigt, bei der ein am Chassis des Wagens aufgehängter Dauermagnet während des Fahrens auf ebener Fahrbahn einen gewissen Abstand von dieser hat, jedoch beim Befahran des Transportbandes von einer magnetisierbaren Schicht desselben angezogen wird und durch Reibkontakt den Wagen an Ort und Stelle hält. Bei den vorzugsweise üblichen Transportbändern ist aber keine solche Schicht vorhanden, sondern sie bestehen aus gelenkig miteinander verbundenen Paletten aus Aluminium.

Die Patentschrift GB-A-2057997 offenbart eine Vorrichtung, bei der unter jeder Palette des Transportbandes ein ein- und ausschaltbarer Magnet vorhanden ist, welcher über je einen systemfesten Nocken am Bandanfang ein- und kurz vor dem Ende wieder ausgeschaltet wird. Durch das Magnetfeld wird ein in der Nähe jeder Rolle das Wagens in einem gewissen Bodenabstand federnd aufgehängter Eisenschuh angezogen und bremst den Wagen durch Reibkontakt mit der Bandoberfläche. Die Erfindung sieht allerdings in erster Linie eine Anwendung an Rolltreppen, nicht an förderbandähnlichen Fahrsteigen, vor. Ihre praktische Anwendung dürfte am unverhältnismässigen Aufwand für die Magnete gescheitert sein.

Die PCT-Publikation WO 92/15476 offenbart eine Vorrichtung an Rollen für Selbstbedienungswagen und dergleichen, welche beim Ueberfahren von magnetischem Material einem Bremsglied ermöglicht, Bodenkontakt aufzunehmen und hiebei die Rolle selbst von der Fahrbahn abzuheben. Zweck der Erfindung ist, zu verhindern, dass Selbstbedienungswagen aus einem definierten Areal entfernt werden. Die Blockierung ist so beschaffen, dass sie nur durch entsprechend ausgerüstetes Personal, nicht aber durch den Kunden rückgängig gemacht werden kann. Schon aus diesem Grunde wäre die Erfindung nicht tauglich, die hier vorliegende Erfindungsaufgabe zu lösen. Ausserdem könnte der Wagen nicht einmal auf das Transportband aufgeschoben werden, da er unmittelbar nach Einwirkung des Magneten schon nicht mehr rollfähig ist.

Keine der angeführten Schriften legt das Merkmal von Anspruch 1 der vorliegenden Anmeldung nahe.

Die Aufgabe der vorliegenden Erfindung besteht darin, eine Blockiervorrichtung zur Verwendung an Rollen mit normal breiter Lauffläche, also etwa mit Vollgummireifen, zu schaffen, die einen in die Rillen des Transportbandes eintauchbaran Tastfühler aufweist, also in bekannter Weise die Rillen als die Blockierung auslösendes Merkmal benützt, wobei aber der Tastfühler während der Fahrt auf der normalen, nicht gerillten Fahrbahn keinen Kontakt mit dieser haben soll.

Die Aufgabe wird grundsätzlich durch die Merkmale von Anspruch 1 gelöst, welcher auch Lösungen mit mehrteiligen kinematischen Ketten umfasst.

Anspruch 2 betrifft Lösungen mit einem einzigen beweglichen Teil, nämlich einem vertikal.geführten Schieber, dessen Führung mit grosser Fertigungstoleranz ausgeführt sein darf, was sich sowohl auf die Kosten, wie auch auf die Betriebssicherheit positiv auswirkt. Die Lösungen, die auf dem Anspruch 2 beruhen, machen von der Tatsache Gebrauch, dass sich ungleichnamige Pole anziehen, gleichnamige abstossen.

Die Variante nach Anspruch 3 wird durch verhältnismässig schwache, mit beiden Polen nach oben zeigende Fahrbahnmagnete aktiviert. Bei der Verwendung mit Lenkrollen, was bei Selbstbedienungswagen die Regel ist, muss darauf geachtet werden, dass die austrittsseitige Magnetleiste so weit von der Austrittsstelle aus dem gerillten Transportband entfernt ist, dass eine Lenkrolle, die mit dem Nachlauf voraus austritt, Zeit hat, in die Normallage zurückzukehren.

Die Variante nach Anspruch 4 dagegen wird durch Fahrbahnmagnete aktiviert, deren einer Pol nach oben, der andere nach unten zeigt, und ihre Funktion ist von der Winkellage des Gehäuses einer Lenkrolle unabhängig, wogegen die Fahrbahnmagnete etwas stärker ausgelegt werden müssen.

Bei dieser Variante ist der Tastfühler beim Ertasten einer Rille nur durch sein Eigengewicht belastet. Mit dem Merkmal nach Anspruch 5 wird diese verhältnismässig geringe Kraft bedeutend verstärkt und der Schieber in der untern Endlage gut festgehalten.

Mit dem Merkmal von Anspruch 6 wird erreicht, dass keine zufällig herumliegenden Eisenpartikel an den Schiebermagneten gelangen und diesen kurzschliessen können.

Das Merkmal von Anspruch 7 schliesslich betrifft eine vorteilhafte konstruktive Gestaltung des Merkmales von Anspruch 6 und kann nur einer Blockiervorrichtung nach einem der Ansprüche 4 oder 5 zukommen.

Im folgenden sollen anhand von Zeichnungen ein Ausführungsbeispiel nach Anspruch 3 und eines nach Anspruch 4 erläutert werden. Ferner sollen die Merkmale der Ansprüche 5, 6 und 7 mit einer Figur veranschaulicht werden. Identische Teile in den verschiedenen Figuren sind mit gleichen Ueberweisungszeichen, analoge Teile mit gleichen, aber durch Hochkommata unterschiedenen Zahlen gekennzeichnet.

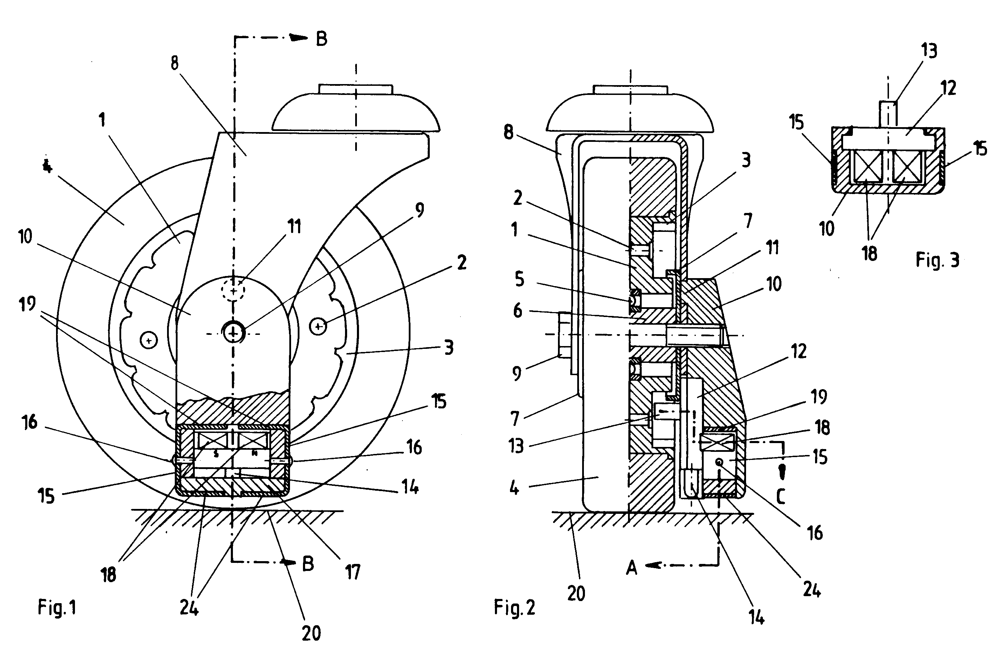

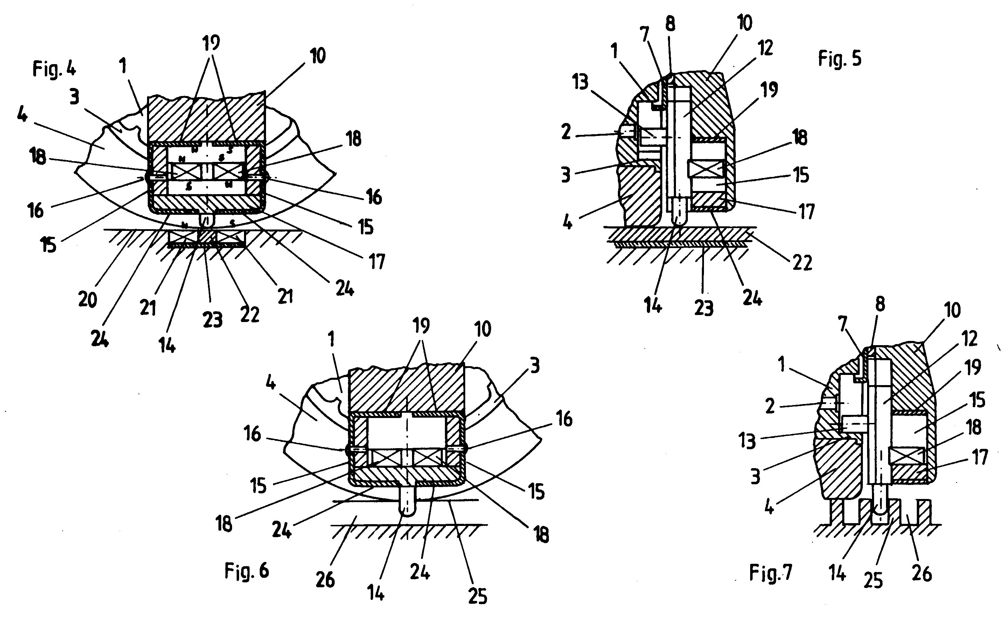

Fig.1 zeigt in Seitenansicht eine Lenkrolle mit Blockiervorrichtung nach Anspruch 3, wobei letztere, soweit zum Verständnis nötig, längs der Linie A in Fig.2 geschnitten ist. Fig.2 zeigt denselben Gegenstand in Fahrtrichtung gesehen, wobei die Seite mit der Blockiervorrichtung längs der Linie B-B in Fig.1 geschnitten ist. Fig.3 zeigt einen Querschnitt durch die Blockiervorrichtung längs der Linie C in Fig.2. Fig.4 und 6 zeigen die wesentlichen Teile der Blockiervorrichtung in der gleichen Darstellung wie Fig.1, jedoch in andern Betriebslagen. Dasselbe gilt für Fig.5 und 7 bezogen auf Fig.2.

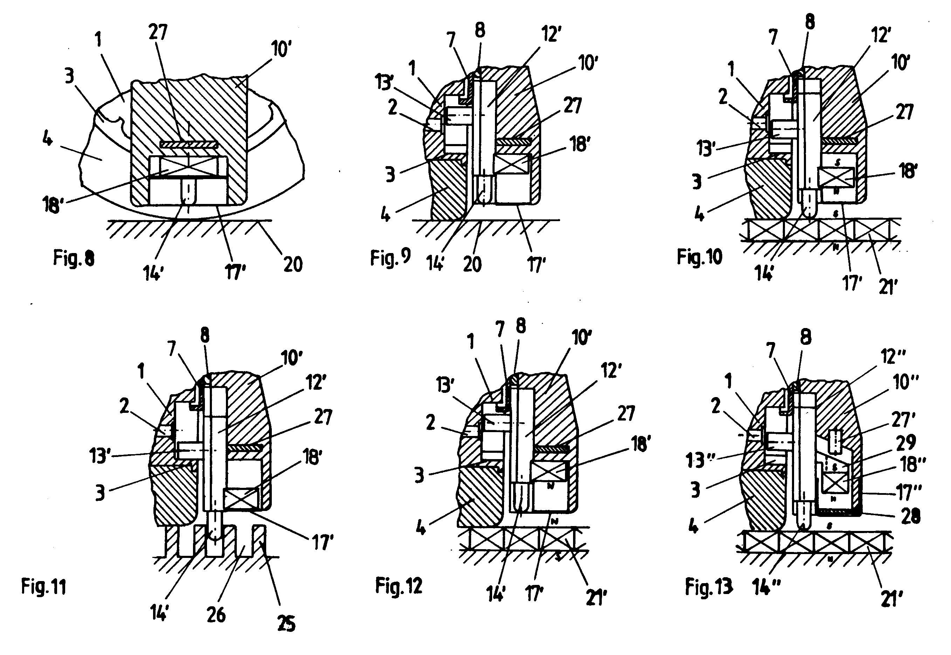

Fig.8 bis 12 zeigen ein Ausführungsbeispiel nach Anspruch 4, wobei Fig.8 der Darstellungsart von Fig.1 entspricht, Fig.9 bis 12 hingegen jener von Fig.2. Fig.8 und 9 zeigen dieselbe Betriebslage. Fig.13 endlich zeigt eine Blockiervorrichtung nach Anspruch 4 mit den zusätzlichen Merkmalen der Ansprüche 5 bis 7, und zwar in der Darstellungsart und Betriebslage entsprechend Fig.10.

Alle dargestellten Ausführungsbeispiele werden mit derselben Lenkrolle gezeigt. Diese besteht aus einem zweiteiligen Rollenkörper 1, der durch Nieten 2 zusammengehalten ist und mindestens auf einer Seite einen Zahnkranz 3 aufweist, einem Reifen 4, einem Kugellager 5, zwei Distanzhülsen 6, zwei Fadenschutzglocken 7, einem Lenkgehäuse 8 und einer Achsschraube 9.

Beim Ausführungsbeispiel nach Anspruch 3 ist ein Gehäuse 10 mittels der Achsschraube 9 am Lenkgehäuse 8 befestigt und durch einen Vorsprung 11, der in ein Loch des Lenkgehäuses eingreift, in seiner Winkellage in Bezug auf dieses festgelegt. In Gehäuse 10 ist ein Schieber 12 vertikal beweglich geführt, der einen Vorsprung 13 und einen Tastfühler 14 aufweist. Zwei Weicheisenjoche 15 von der Form eines liegenden U sind mit Kerbnägeln 16 im Gehäuse 10 befestigt. Das Gehäuse 10 ist unten durch einen Deckel 17 abgeschlossen. Am Schieber 12 sind ferner zwei blockförmige Dauermagnete 18 befestigt, die man sich in vertikaler Richtung und mit verschiedener Polarität magnetisiert zu denken hat.

Während des Rollens auf normaler, ebener Fahrbahn nimmt der Schieber 12 die in Fig.1 und 2 dargestellte Lage ein, wobei zwischen den Magneten 18 und den oberen Schenkeln 19 der Weicheisenjoche 15 Anziehung herrscht. Der Tastfühler 14 befindet sich dabei vollständig im Innern der Gehäuses 10. Fig.4 zeigt die Vorrichtung beim Ueberfahren einer in der Fahrbahn 20 verlegten Magnetleiste. Diese besteht aus zwei entgegengesetzt gepolten Magneten 21, einem unmagnetischen Zwischenstück 22 und einem Joch 23 aus Weicheisen. Bei der dargestellten Polarität induzieren die Magnete 21 über die untern Schenkel 24 der Weichensenjoche 15 in diesen ein solches Feld, dass zwischen den obern Schenkeln 19 und den Magneten 18 infolge Gleichnamigkeit der Pole Abstossung eintritt, währen die untern Schenkel 24 die Magnete 18 anziehen. Unter dieser Wirkung und durch sein Eigengewicht bewegt sich der Schieber 12 nach unten, bis der Tastfühler 14 auf der Fahrbahn 20 aufsteht. Es ist zu beachten, dass in dieser Lage der Vorsprung 13 noch nicht blockierend in den Zahnkranz 3 eingreift. Blockierung tritt, wie aus Fig.6 und 7 ersichtlich, erst ein, wenn das eigentliche Transportband erreicht ist und der Tastfühler 14 zwischen zwei Rippen 25 in eine Rille 26 desselben eintaucht, wobei dann der Vorsprung 13 in den Zahnkranz 3 eingeift. Beim Erreichen des Austrittskammes des Transportbandes gleitet der Tastfühler 14 auf diesen auf, wodurch der Schieber 12 zwangsläufig zunächst in die Lage nach Fig.4 und 5 gehoben und damit die Blockierung gelöst wird. Anschliessend wird die Austrittsmagnetleiste überfahren, die der in Fig.4 dargestellten entspricht, aber umgekehrt gepolt ist. Dabei wird in den Jochen 15 ein Feld von solcher Polarität induziert, dass der Schieber 12 vollends angehoben wird und mit den Magneten 18 an den Schenkeln 19 hängenbleibt.

Das Ausführungsbeispiel nach Anspruch 4 weist ein Gehäuse 10′, sowie einen Schieber 12′ mit einem Vorsprung 13′ und einem Tastfühler 14′ auf, welche Teile den analogen Teilen des vorher beschriebenen Beispieles genau entsprechen. Der Deckel 17′ ist hier indessen möglichst dünn ausgeführt, um nicht Luftspalt zwischen dem Fahrbahnmagneten 21′ und dem Schiebermagneten 18′ zu vergeuden. Der Schiebermagnet 18′ ist in vertikaler Richtung magnetisiert. Ein Weicheisenanker 27 im Gehäuse 10′ wird vom Magneten 18′ angezogen und hält damit den Schieber beim Rollen auf ebener, normaler Fahrbahn in seiner fahrbahnfernen Lage. Am Eintritt des Transportbandes wird eine Magnetleiste überfahren, die aus einer einzigen Reihe von vertikal magnetisierten Dauermagneten 21′ besteht. Diese übt eine anziehende Kraft auf den Magneten 18′ aus, die grösser ist, als die Anziehung durch den Anker 27, sodass der Anker zunächst in die in Fig.10 und beim Weiterrollen infolge des Eigengewichtes des Schiebers in die in Fig.11 dargestellte, blockierende Lage gerät. Beim Austritt aus dem Transportband wird der Schiebers in die in Fig.11 dargestellte, blockierende Lage gerät. Beim Austritt aus dem Transportband wird der Schieber 12′zunächst wie beim vorbeschriebenen Ausführungsbeispiel in die deblockierte Lage gemäss Fig.10 und dann durch die Austrittsmagnetleiste 21′, die jetzt umgekehrt gepolt ist, in die fahrbahnferne Lage gehoben, wo er mit dem Magneten 18′ am Anker 27 hängen bleibt.

In Fig.13 ist der Magnet 18˝ mit seiner obern Polfläche an einem Ausleger 29 befestigt und taucht mit seitlichem Spiel in einen von den Seitenwänden der Gehäuses 10˝ und dem U-förmigen Deckel 17˝ gebildeten Napf. Allfällige Eisenpartikel, die angezogen werden, bleiben aussen an diesem Napf hängen und werden beim Ueberfahren einer Magnetleiste von dieser angezogen, von wo sie im Zuge der Fussbodenreinigung leicht entfernt werden können. Der obere Weicheisenanker 27′ ist hier aus konstruktiven Gründen als Rundbolzen ausgeführt und kann in eine Aussparung des Auslegers 29 eintauchen. Ein unterer Weicheisenanker 28 sorgt dafür, dass der Schieber 12˝ ab einem gewissen Punkt seines Hubes, der über der Lage gemäss Fig.13 liegen soll, nach unten gezogen wird.

Die beschriebenen Magnetsysteme sind der Rechnung nur sehr schwer zugänglich. Ihre optimale Form wird viel besser durch Versuche ermittelt, die dem durchschnittlichen Fachmann keine Probleme stellen. Die verschiedenen Luftspalte dienen als Versuchsparameter, und es können an den Magneten auch Polschuhe angebracht werden. Beim der Ausführung nach Anspruch 3 ist dem Umstand Rechnung zu tragen, dass beim Ueberfahren der Eintrittsmagnetleiste eine Stellung durchfahren wird, wo nur ein Magnetpol einem Schenkel der Weicheisenjoche gegenübersteht und in diesem ein Feld induziert, das den Schieber nach oben stossen möchte. Die Magnete sind also so auszulegen, dass die auftretende Kraft hiefür nicht ausreicht. Eine ähnliche Wirkung, jedoch schwächer, ist auch bei der Ausführung nach Anspruch 4 zu beobachten, wenn die Magnetleiste aus einer einzigen Reihe von vertikal magnetisierten Magneten besteht. Das kommt daher, dass die Kraftlinien vom untern Pol auf dem kürzesten Wege zum obern Pol führen möchten. Mit Vorteil verwendet man auch hier eine Magentleiste wie in Fig.4 dargestellt, wobei der dem Transportband nähere Pol den Schieber anziehen, der andere ihn abstossen soll, und zwar an beiden Enden des Transportbandes. Diese Anordnung hat erst noch den Vorteil, dass das Transportband in beiden Fahrtrichtungen betrieben werden kann.

Die optimale Gestalt des Ankers (28) ist ebenfalls durch Versuche zu ermitteln. Er soll ausreichend Weicheisen enthalten, um den Schieber mit der gewünschten Kraft nach unten zu ziehen, soll aber die Beeinflussung des Schiebermagneten 18˝ durch die Fahrbahnmagneten nicht behindern. In den Versuchen bewährt hat sich eine rechteckige Platte mit Aussparungen.

Die Form des Tastfühler ist nicht erfindungswesentlich. Anstelle des hier dargestellten Rundbolzens kann beispielsweise eine Rolle verwendet werden. Dies empfiehlt sich namentlich dann, wenn mit abgebrochenen Kammzähnen zu rechnen ist.

## Patentansprüche

1. Blockiervorrichtung an Rollen für von Hand bewegte Transportwagen mit einem Tastfühler (14), dessen Eintauchen in eine Rille (26) eines längsgerillten Transportbandes die Blockierung der Rolle bewirkt, gekennzeichnet durch Mittel, um den Tastfühler vor dem Befahren des Transportbandes aus einer Lage ohne Fahrbahnkontakt in eine solche mit Fahrbahnkontakt zu bringen, und Mittel, um den Tastfühler beim Verlassen des Transportbandes in die Lage ohne Fahrbahnkontakt zurückzuheben, wobei mindestens die erstgenannten Mittel durch die Einwirkung des Feldes eines in der Fahrbahn befindlichen Magneten aktiviert werden.

2. Blockiervorrichtung nach Anspruch 1 mit einem am Rollengehäuse (8) befestigten Gehäuse (10) und einem darin vertikal beweglichen, den Tastfühler (14) und einen zum blockierenden Eingriff in Teile des Rollenkörpers bestimmten Vorsprung (13) aufweisenden Schieber (12), dadurch gekennzeichnet, dass am Schiebar (12) mindestens ein Dauermagnet (18) befestigt ist, und dass der Schieber (12) in seiner fahrbahnfernen Lage magnetisch an mindestens einem gehäusefesten Weicheisenteil (19, 27) haftet und durch von in der Fahrbahn befindlichen Magneten ausgehende M«gnetfelder unterschiedlicher Polarität aus dieser Lage freigegeben, beziehungsweise in diese zurückgebracht wird.

3. Blockiervorrichtung nach Anspruch 2, dadurch gekennzeichnet, dass der Schieber (12) zwei in vertikaler Richtung magnetisierte Dauermagnete (18) von einander entgegengesetzter Polarität aufweist, von denen jeder innerhalb der Schenkel (19, 24) eines Weicheisenjoches (15) von der Form eines liegenden U beweglich ist, wbei die Weicheisenjoche (15) einander die Oeffnungen zukehren, und wobei ihre fahrbahnnäheren Schenkel (24) mit dem untern Ende des Gehäuses (10) bündig sind.

4. Blockiervorrichtung nach Anspruch 2, dadurch gekennzeichnet, dass der Schieber (12') einen einzigen, in vertikaler Richtung magnetisierten Dauermagneten (18') und das Gehäuse (10') einen über diesem liegenden Weicheisenanker (27) aufweist.

5. Blockiervorrichtung nach Anspruch 4, dadurch gekennzeichnet, dass das Gehäuse (10'') einen unter dem Dauermagneten (18'') liegenden Weicheisenanker (28) aufweist.

6. Blockiervorrichtung nach einem dar Ansprüche 3, 4 oder 5, dadurch gekennzeichnet, dass der Dauermagnet (18'') mit seiner oberen Fläche an einem Ausleger (29) des Schiebers (12'') befestigt ist und bei der Abwärtsbewegung des Schiebers (12'') mit seitlichem Spiel in einen nur nach oben offenen Napf eintaucht.

7. Blockiervorrichtung nach einem der Ansprüche 4 oder 5, dadurch gekennzeichnet, dass zwei Seiten dieses Napfes durch Wände das Gehäuses (10''), zwei andere Seiten und der Boden durch ein U-förmiges, auf Teile des Gehäuses (10'')aufschiebbares, nichtmagnetisches Blechteil (17'') gebildet werden.

## Claims

1. Brake device for trolley wheels using a probe (14) whose dipping into a groove (26) of a longitudinally grooved conveyer belt causes the blocking of the wheel, characterized by means to position the probe, before entering the conveyer belt, out of a remote position in a position being in contact with the ground, and means to remove the probe, leaving the conveyer belt, in a remote position, whereby at least aforesaid means being activated by the field of a magnet embedded in the ground.

2. Brake device according claim 1 comprising a casing (10) secured to the casing (8) of the wheel and a slide (12) vertically movable therein, which shows the probe (14) and a projection (13) meant for blocking mesh with parts of the wheel body, characterized by the fact that the slide (12) shows at least a permanent magnet, moreover that the slide (12) in its remote position adheres to at least one part (19, 27) consisting of soft iron and, by fields of different polarity emanating from magnets imbedded in the ground, is released from, respectively set back to this position.

3. Brake device according claim 2, characterized by the fact that the slide (12) shows two, vertically magnetized permanent magnets (18) of opposite polarity, whereof each is movable within the legs (19, 24) of a soft iron yoke (15) shaped as a lying U, whereby the yokes (15) facing each other with the mouth and whereby their legs (24) situated closer to the ground flushing with the lower end of the housing (10).

4. Brake device according claim 2, characterized by the fact that the slide (12') shows one single, vertically magnetized magnet (18), moreover that the housing (10') shows a soft iron yoke (27) situated above said magnet.

5. Brake device according to claim 4, characterized by the fact, that the housing (10'') shows a soft iron yoke (18'') situated below the magnet (18'').

6. Brake device according to one of the claims 3, 4, or 5, characterized by the fact, that the upper face of the magnet (18'') is secured to a projection (29) of the slide (12'') whereby when moving downwards, dipping with lateral clearance in an only upwards opened cup.

7. Brake device according to one of the claims 4 or 5, characterized by the fact, that two sides of said cup are formed by walls of the housing (10''), two other sides and the bottom are formed by an U-shaped nonmagnetical sheet iron, which is shoved over parts of the housing (10'').

## Revendications

1. Dispositif de blocage pour roues de chariot contenant un palpeur (14) qui, en plongeant dans une rainure (26) d'une bande transporteuse à rainures longitudinales, effectue la blocage de la roue, caractérisé par des moyens qui, avant l'entrée de la bande transporteuse, mouvant le palpeur d'une position sans contact avec le sol dans une position avec contact avec le sol, et des moyens qui, en sortant la bande transporteuse, remettent le palpeur dans la position sans contact avec le sol, à l'occasion de quoi au moins les moyens mentionnés premièrement sont activés par la champ de force d'un aimant se trouvant dans la piste de roulage.

2. Dispositif selon revendication 1 avec un boîtier (10) fixé ä la fourche (8) de la roue et avec une pièce coulissante (12) mouvable verticalement dans le boîtier (10) et comprenant le palpeur (14) et une saillie (13), caractérisé par le fait qu'à la pièce coulissante (12) est fixé au moins un aimant permanent (18) et le fait que la pièce coulissante, dans sa position sans contact avec le sol, adhère par une force magnétique à au moins une pièce (19,27) en fer doux solidaire au boîtier (10) et est eloignée de, respectivement ramenée à, cette position par des champs magnétiques de polarité différente émanant des aimants se trouvant dans la piste de roulage.

3. Dispositif selon revendication 2, caractérisé par le fait que la pièce coulissante (12) est munie de deux aimants permanents aimantés en direction verticale de polarité différente dont chacun est mouvable à l'intérieur des jambes (19, 24) d'une culasse (15) en fer doux en forme d'un U horizontal, à l'occasion de quoi les culasses (15) tournent leurs ouvertures l'une vers l'autre et les jambes (24) plus proches à la piste de roulage sont à fleur du bout inférieur du boîtier (10).

4. Dispositif selon revendication 2, caractérisé par le fait que la pièce coulissante (12') est munie d'un seul aimant permanent (18'), aimanté en direction verticale, et le boîtier (10') est muni d'une armature (27) en fer doux située au-dessus du susdit aimant.

5. Dispositif salon revendication 4, caractérisé par le fait que la boîtier (10'') est muni d'une armature (28) en fer doux située au-dessous de l'aimant permanent (18'').

6. Dispositif selon une des revendications 3, 4 ou 5, caractérisée par le fait que l'aimant permanent (18'') est fixé par sa surface supérieure à une console (29) de la pièce coulissante (12'') et, à l'occasion de la descente de la pièce coulissante (12'') plonge, avec jeu latéral, dans un godet qui n'est ouvert que vers la haut.

7. Dispositif selon une des revendications 4 ou 5, caractérisée par le fait que deux côtés du susdit godet sont formés par des parois du boîtier (10''), les deux autres côtés et le fond sont formés par une pièce (17'') en forme d'un U, en tôle non aimantable, qui est poussée sur des parties du boîtier (10'').
